# NOUVEAU FASCICULE DE BREVET EUROPEEN

(11) **EP 2 764 080 B2**
(45) Date de publication et mention de la décision concernant l'opposition: **24.10.2018**
(45) Mention de la délivrance du brevet: 10.12.2014
(21) Numéro de dépôt: 13762442.5
(22) Date de dépôt: 10.09.2013
(51) Int. Cl.: C12C 7/00, C12C 7/22, C12C 7/26, C12C 7/20

(54) **PROCEDE DE FABRICATION DE MOÛT A CONSOMMATION REDUITE EN ENERGIE THERMIQUE ET EAU DE PROCESS.**
VERFAHREN ZUR HERSTELLUNG VON WÜRZE MIT NIEDRIGEM VERBRAUCH VON WÄRMEENERGIE UND BRAUCHWASSER
PROCESS FOR MANUFACTURING WORT HAVING A LOWER CONSUMPTION OF THERMAL ENERGY AND PROCESS WATER

(30) Priorité: 11.09.2012 BE 201200597
(43) Date de publication de la demande: 13.08.2014
(73) Titulaire: Meura S.A., 7600 Péruwelz (BE)
(72) Inventeur: CANTILLON, Pascal, B-7531 Havinnes (BE); DE BRACKELEIRE, Christian, B-1933 Sterrebeek (BE); HARMEGNIES, Frédérique, B-4210 Burdinne (BE)
(74) Mandataire: Vandeberg, Marie-Paule L.G.
(86) Numéro de dépôt international: PCT/EP2013/068681
(87) Numéro de publication internationale: WO 2014/040972

(56) Documents cités:
- WO-A1-2011/076410
- DE-A1- 3 345 396
- 'OPTIMIERUNG DES WäRME-UND WASSERHAUSHALTES IM SUDHAUS' BRAUWELT no. 38/39, 1995, page 1974

## Description

### Domaine de l'invention

La présente invention concerne un procédé optimisé de fabrication de moût qui permet une importante réduction de consommation d'énergie thermique ainsi qu'une réduction significative de consommation d'eau de process par la mise en oeuvre d'échanges thermiques optimaux entre moût et eau de process.

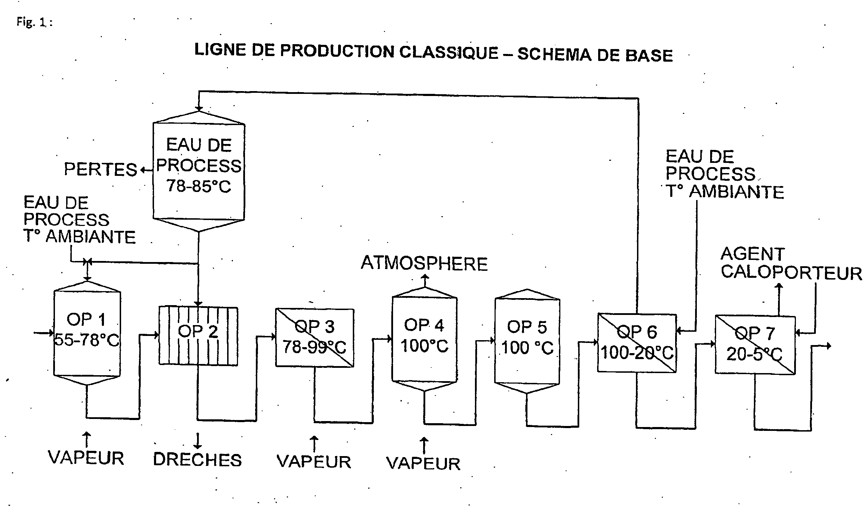

La fabrication du moût est une étape nécessaire pour plusieurs industries, en particulier dans les domaines brassicoles, de la distillerie ou de toutes autres industries relatives à la fabrication d'extraits. La fabrication du moût selon les procédés classiques peut être réalisée de façon discontinue (en batch) ou continue et comprend généralement les étapes de brassage (OP 1), de filtration de la maische (OP 2), de préchauffage (OP 3), d'ébullition (OP 4), de clarification (OP 5) et de refroidissement (OP 6 et OP 7) du moût. Le procédé peut éventuellement comprendre une étape supplémentaire de stripage (OP 8) situé avant ou entre les étapes de clarification (OP 5) et de refroidissement (OP 6 et OP 7). Ces différentes étapes de fabrication sont représentées à la Figure 1.

Le brassage (OP 1) consiste en l'hydratation de farine de céréale ou autre source d'amidon avec de l'eau de process à une température généralement comprise entre 40°C et 65°C. Communément cette température est obtenue par mélange d'eau de process à température ambiante et d'eau de process chaude (78-85°C). La farine hydratée, appelée maische, est ensuite chauffée progressivement selon un programme de chauffe défini afin de convertir l'amidon en extrait fermentescible. La maische est ainsi chauffée jusqu'à une température généralement comprise entre 76 et 85°C avant d'être filtrée.

La filtration (OP 2) de la maische permet de séparer la partie soluble contenant l'extrait fermentescible (moût) et la partie insoluble (drêche). L'opération de filtration comporte en outre une phase de « lavage » pendant laquelle l'extrait soluble contenu dans la drêche est récolté. Communément cette phase est réalisée en introduisant dans le filtre (filtre-presse ou cuve-filtre) de l'eau de process chaude (78-85°C) qui se charge d'extrait au contact de la drêche et est incorporée dans le moût.

Le préchauffage (OP 3) permet de chauffer le moût ainsi récolté de sa température de récolte (76-85°C) à la température d'ébullition locale (100°C au niveau de la mer).

L'ébullition (OP 4) du moût pendant une période déterminée, généralement de 60 à 90 minutes, a pour objectifs principaux la stérilisation du moût, la coagulation des protéines (trub), l'isomérisation du houblon et l'élimination des composés volatiles indésirables. Dans les cuves d'ébullition traditionnelles, le moût est bouilli en alternant des périodes d'ébullition « calme » et des périodes d'ébullition « vive ».

La clarification (OP 5) du moût bouilli permet de séparer la partie soluble contenant l'extrait fermentescible et la partie insoluble (trub) formée pendant l'ébullition.

Le Refroidissement (OP 6 et 7) du moût de sa température de clarification à la température de fermentation, généralement comprise entre 5 et 20°C est une opération qui s'effectue communément dans un échangeur de chaleur alimenté d'une part par le moût chaud qui est refroidi, d'autre part par de l'eau de process à température ambiante ou refroidie, qui est chauffée communément à une température de 78-85°C. Cette opération peut optionnellement être complétée par un refroidissement supplémentaire du moût (OP 7) à l'aide d'un fluide caloporteur, en fonction de la température de moût souhaitée.

L'eau de process chaude (78-85°C) produite au cours du refroidissement du moût est communément stockée dans un réservoir tampon en vue d'être incorporée au cours des opérations de brassage (OP 1) et de filtration (OP 2), ainsi que pour les rinçages après transferts de cuve à cuve. Néanmoins la quantité d'eau de process chaude ainsi produite est habituellement nettement excessive, de l'ordre d'environ 150%, en comparaison de la quantité d'eau de process requise pour la fabrication de moût. Cette situation conduit donc habituellement à des surplus de production d'eau de process chaude qui représente pour l'exploitant une perte d'eau et d'énergie.

La fabrication du moût requiert plusieurs étapes de chauffage et de refroidissement fortement consommatrices en eau et en énergie. Dans le but de réduire les coûts d'exploitation, plusieurs procédés de récupération d'énergie ont été développés par le passé et concernent principalement l'étape d'ébullition du moût qui est l'un des postes le plus générateur d'énergie. Plusieurs de ces méthodes de récupération d'énergie sont détaillées par exemple dans EBC Manual of Good Practice (vol. 9, 2002, Wort boiling and clarification, §4.6).

L'une des méthodes les plus courantes est de type Pfaduko (Pfannen Dunst Kondensator); elle consiste en un échange de chaleur par condensation des vapeurs d'eau produite lors de l'ébullition (OP 4) et requiert en général l'utilisation de condenseurs de vapeur placé au niveau de la cheminée de la cuve d'ébullition. L'énergie est transmise via un échangeur de chaleur alimenté d'une part par la vapeur de la cuve d'ébullition qui se condense, et d'autre part par un agent caloporteur qui est le plus souvent une eau adoucie ou osmosée. L'agent caloporteur est par la suite stocké dans un ou plusieurs réservoirs utilisés comme bâches d'énergie (ou EST pour energy storage tank). L'agent caloporteur à basse température, habituellement de l'ordre de 78 à 85°C, est ainsi prélevé dans le bas du réservoir de stockage d'énergie, chauffé via le condenseur de vapeur jusqu'à une température habituellement comprise entre 97 et 99°C et réintroduit dans le haut du tank de stockage d'énergie.

Le réservoir de stockage d'énergie est ainsi « chargé » au cours de l'opération d'ébullition du moût.

Puis cette énergie est restituée au produit au cours de l'opération de préchauffage (OP 3) du moût. L'énergie est transmise via un échangeur de chaleur alimenté d'une part par le moût filtré qui est réchauffé à une température proche de sa température d'ébullition, et d'autre part par l'agent caloporteur qui circule en boucle fermée sur le tank de stockage d'énergie à stratification. L'agent caloporteur à haute température, généralement de l'ordre de 97 à 99°C, est ainsi prélevé dans le haut du tank de stockage d'énergie, éventuellement surchauffé à l'aide de vapeur, puis cède sa chaleur dans le préchauffeur de moût et est réintroduit dans le bas du tank de stockage d'énergie à une température habituellement comprise entre 78 et 85°C.

Le tank de stockage d'énergie est ainsi « déchargé » au cours de l'opération de préchauffage (OP 3) du moût.

La circulation de l'agent caloporteur suit ainsi un cycle de chauffage et de refroidissement permettant le transfert et la récupération d'énergie.

Ce dispositif de récupération d'énergie en boucle fermée par agent caloporteur permet de réduire la consommation d'énergie thermique nécessaire à la fabrication du moût d'environ 25%. Néanmoins ce dispositif ne réduit aucunement le surplus de production d'eau de process chaude.

Certains constructeurs ont récemment développé des solutions de récupération d'énergie permettant, outre la récupération de chaleur au niveau de la cuve d'ébullition évoquée précédemment, une récupération de chaleur supplémentaire au niveau du refroidissement du moût. Une telle amélioration des est décrite dans la demande WO 2011/76410. Dans ce but, en plus d'être chauffé au cours de l'opération d'ébullition (OP 4), l'agent caloporteur est également réchauffé au cours de l'opération de refroidissement (OP 6) du moût.

L'énergie est donc captée au cours du refroidissement du moût via un échangeur de chaleur alimenté d'une part par le moût chaud qui se refroidit d'une température de 98-99°C jusqu'à une température de 79-82°C, et d'autre part par un agent caloporteur qui tourne en boucle fermée sur un tank de stockage d'énergie à stratification. L'agent caloporteur à basse température (habituellement 78-85°C) est ainsi prélevé dans le bas du tank de stockage d'énergie, chauffé via le refroidisseur de moût jusqu'à une température habituellement de 95-96°C et réintroduit dans le haut du tank de stockage d'énergie.

Le tank de stockage d'énergie est ainsi « chargé » au cours de l'opération de refroidissement du moût.

L'énergie nécessaire au préchauffage (OP 3) du moût étant déjà couverte par l'énergie récupérée au cours de l'opération d'ébullition (OP 4), cette nouvelle quantité d'énergie doit être mise en oeuvre à d'autres niveaux du procédé.

Une possibilité est d'utiliser cette énergie afin de chauffer la maische au cours de l'opération de brassage (OP 1), au travers d'échangeur de chaleur de type double-paroi.

Ce dispositif supplémentaire de récupération d'énergie en boucle fermée par agent caloporteur permettrait selon son inventeur de réduire davantage la consommation d'énergie thermique nécessaire à la fabrication du moût. Cependant ce dispositif présente les inconvénients suivants :
- Une difficulté de stockage d'énergie efficace, dans la mesure ou vu la multiplication des opérations au cours desquelles cette énergie est consommée (préchauffage (OP 3) du moût de 78-85°C à 97-99°C d'une part, chauffage de la maische (OP 1) en plusieurs étapes successives de 40-65°C à 76-78°C d'autre part), l'agent caloporteur est réintroduit dans le tank de stockage d'énergie à des températures variables, ce qui perturbe et complexifie le principe de stratification (nécessité de réinjection à niveaux multiples).
- Une difficulté de transmission de l'énergie entre l'agent caloporteur et le produit au niveau du brassage. Etant donné la nature du produit (maische) qui, d'une part, contient des particules en suspension, ce qui ne permet pas l'utilisation de simples échangeurs de chaleur à plaques comme sur le moût, et d'autre part est un produit réputé sensible aux forces de cisaillement et à l'oxydation, ce qui rend la chauffe de ce produit délicate. Il est donc difficile de combiner à la fois multiples possibilités de chauffe et préservation de la qualité du produit.

L'un des inconvénients des méthodes Pfaduko est qu'elles nécessitent de fournir une quantité d'énergie de chauffage importante lors de l'étape d'ébullition du moût (OP 4) afin de pouvoir récupérer suffisamment d'énergie après la condensation de la vapeur.

Un autre inconvénient de ces méthodes est qu'elles produisent généralement un excédent en eau chaude qui n'est pas suffisamment valorisé et très souvent perdu.

Certaines technologies peu utilisées dans le monde brassicole combinent les étapes d'ébullition (OP 4) et de stripage (OP 8). Par exemple, la demande internationale WO 95/26395 décrit une méthode de fabrication de moût comprenant une étape d'ébullition continue et une étape de stripage. Cependant, ces technologies n'ont à l'heure actuelle pas rencontré un franc succès car, d'un point de vue purement énergétique, elles ne présentent pas d'avantage marqué par rapport aux systèmes comprenant un Pfaduko. La publication de S. Fischer « Optimierung des Wärme- und Wasserhaushaltes im Sudhaus » Brauwelt, N° 38/39, 1995, page 1974, décrit un procédé de préparation de moût comportant une récupération d'énergie lors du refroidissement du moût.

Il existe donc un besoin pour une méthode de récupération d'énergie qui ne présente pas les inconvénients mentionnés précédemment, tout en permettant une récupération d'énergie au moins aussi efficace que les méthodes existantes et ne nécessitant qu'une faible consommation en eau.

Les inventeurs ont ainsi développé un nouveau procédé qui répond à ces critères. En particulier, l'un des objets de la présente invention est d'optimiser l'efficacité thermique de la fabrication du moût. Un second objet de l'invention consiste à réduire la consommation en eau de process nécessaire au procédé ainsi que de réduire considérablement le surplus de production en eau de process chaude.

### Figures

Figure 1 : La Figure 1 représente un schéma de principe du processus de fabrication de moût froid de brasserie comprenant les opérations de brassage (OP 1) ; de filtration (OP 2) ; de préchauffage (OP 3) ; d'ébullition (OP 4) ; de clarification (OP 5) ; de refroidissement (OP6 et OP 7). L'eau de process chaude formée lors du refroidissement du moût (OP 6) est récupérée dans une bâche d'eau de process chaude à une température généralement comprise entre 78 et 85°C et est utilisée comme eau d'empatage lors du brassage (OP 1) et eau de lavage du gâteau lors de la filtration (OP 2).

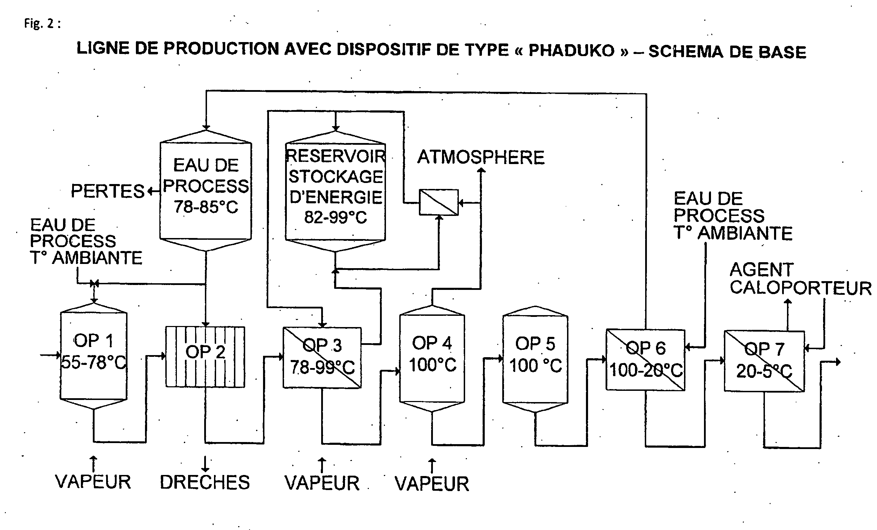

Figure 2 : La Figure 2 est un schéma de principe du processus de fabrication de moût comprenant les mêmes étapes de fabrication que celles mentionnée à la Figure 1. Le procédé comprend un système de récupération d'énergie de type Pfaduko entre les étapes de préchauffage (OP 3) et d'ébullition (OP 4).

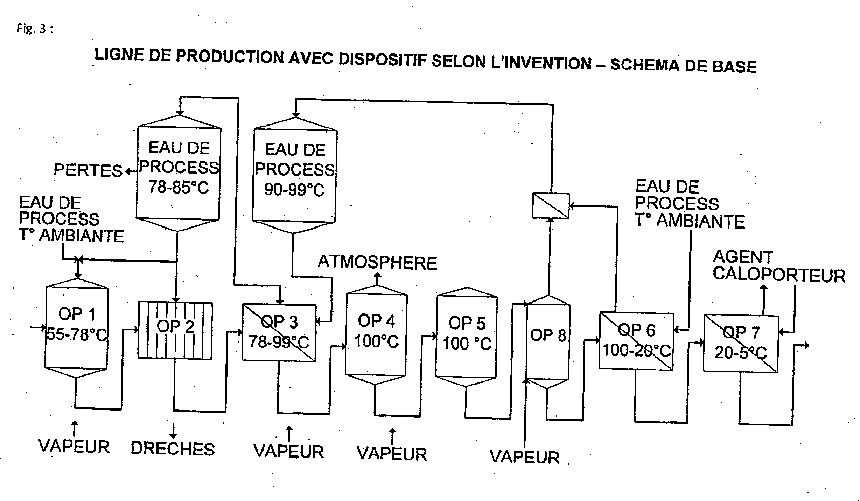

Figure 3 : La Figure 3 est un schéma de principe du processus de fabrication de moût comprenant les étapes de fabrication de la Figure 1. Le procédé comprend un système de récupération d'énergie selon l'invention.
   L'énergie thermique du refroidissement du moût (OP 6) et de l'étape de stripage optionnelle (OP 8) est récupérée dans une bâche d'eau de process chaude à une température comprise entre 90 et 99°C. L'eau de process permet de préchauffer le moût (OP 3) puis est ensuite utilisée comme eau d'empatage lors du brassage (OP 1) et comme eau de lavage du gâteau lors de la filtration (OP 2).
Figure 4 : Schéma de principe d'un procédé classique de fabrication de moût comprenant les opérations mentionnées à la Figure 1. Le schéma indique le bilan énergétique détaillé de chaque opération. Les valeurs sont exprimées en Mégajoules par hectolitre de moût à 15°P (extraits exprimé en % en poids de matières solubles).
Figure 5 : Schéma détaillant le bilan énergétique d'un procédé avec Pfaduko. Les valeurs sont exprimées en Mégajoules par hectolitre de moût à 15°P.
Figure 6 : Schéma détaillant le bilan énergétique d'un procédé selon l'invention. Les valeurs sont exprimées en Mégajoules par hectolitre de moût à 15°P.
Figure 7 : schéma de principe d'un procédé classique de fabrication de moût comprenant les opérations mentionnées à la Figure 1. Le schéma indique le bilan détaillé de consommation en eau de process. Les valeurs sont exprimées en Kg par hectolitre de moût à 15°P.
Figure 8 : Schéma détaillant le bilan en eau de process d'un procédé avec Pfaduko. Les valeurs sont exprimées en Kg par hectolitre de moût à 15°P.
Figure 9 : Schéma détaillant le bilan en eau de process du procédé selon l'invention. Les valeurs sont exprimées en Kg par hectolitre de moût à 15°P.
Figure 10 : schéma de principe détaillant le bilan en eau de process du procédé selon l'invention (Figure 9) comprenant une étape supplémentaire de refroidissement de l'eau de process chaude avant la mise en oeuvre du brassage (OP 1).

### Description de l'invention

La présente invention s'applique aux procédés de fabrication de mout comprenant les étapes de brassage (OP 1), de filtration de la maische (OP 2), de préchauffage (OP 3), de formation (OP 4) et de stripage (OP 8), de clarification (OP 5) et de refroidissement (OP 6) du moût.

La méthode selon l'invention permet de réduire la consommation en énergie et en eau, ci-après eau de process qui est utilisée dans une boucle ouverte c'est-à-dire qu'elle est par la suite consommée par incorporation dans le produit. Contrairement à un agent caloporteur cette eau de process n'est donc pas une eau adoucie ou osmosée dans le but d'être soumise à une circulation et n'est pas utilisée pour le transfert d'énergie dans une boucle fermée qui consiste en un circuit de chauffage et de refroidissement. L'eau de process selon l'invention est utilisée à contre-courant de la chaine de production ce qui permet successivement de refroidir (OP 6) et de préchauffer (OP 3) le moût. L'eau de process utilisée sera ensuite stockée en vue d'être incorporée dans le produit comme eau d'empatage et/ou de lavage au cours du lavage du gâteau de filtration.

Le procédé selon l'invention comprend les opérations suivantes:
a) Refroidissement (OP 6) du moût, par une eau de process, la température de l'eau de process en sortie d'échangeur est supérieure à 90°C, de préférence comprise entre 90 et 97°C et préférentiellement comprise entre 95 et 97°C.
b) l'eau de process produite à l'étape (a) est stockée, à une température de stockage supérieure à 90°C, la température est avantageusement comprise entre 96 et 99°C,
c) optionnellement la méthode peut comprendre une étape de surchauffage de l'eau de process à une température légèrement supérieure à sa température d'ébullition, de préférence comprise entre 103 et 105°C.
d) l'eau de process chaude obtenue aux étapes (b) ou (c) est utilisée pour le préchauffage (OP 3) du moût, avantageusement, le moût est préchauffée à une température comprise entre 96 et 99°C,
e) l'eau de process produite après refroidissement en (d) est stockée en vue de son incorporation dans le produit comme eau d'empatage pour les opérations de brassage (OP 1) et eau de lavage du gâteau de filtration (OP 2).

Selon un mode de réalisation de l'invention, l'eau de process qui est utilisée pour refroidir le moût peut être refroidie de sa température d'origine, c'est-à-dire habituellement de la température ambiante du site de production, à une température légèrement inférieure à la température souhaité du moût refroidit, généralement entre 7 et 20°C. Ce refroidissement est réalisé par un second échangeur ou dans un second étage du même échangeur en utilisant un fluide réfrigérant tel que de l'eau glycolée, de l'eau alcoolisée, ou tout autre liquide réfrigérant adapté. De préférence la température de l'eau de process après refroidissement est comprise entre 2 et 15°C.

Lors de l'étape (a), l'eau de process est utilisée pour refroidir (OP 6) le moût. Cet échange est réalisé de façon optimale afin d'obtenir un écart de température minimal de l'ordre de 3 degrés entre le moût entrant et l'eau sortant de l'échangeur. Selon un mode de réalisation de l'invention, l'échange de chaleur peut être réalisé par au moins un échangeur thermique qui permet dans une première étape de refroidir le moût d'une température de 96 à 99°C à une température voisine de 30°C puis lors d'une seconde étape de refroidir le moût à une température comprise entre 5 et 20°C par une solution réfrigérante telle qu'une solution comprenant du glycol. Selon un mode de réalisation de l'invention, la première étape de refroidissement du moût peut s'effectuer partiellement avant et après clarification du moût dans deux échangeurs thermiques distincts. Par exemple , le premier échangeur réduit la température du moût de 99°C à 85°C avant clarification , et un second échangeur réduit la température du moût de 85°C à 30°C.

Lors de l'étape de refroidissement (OP 6) du moût, l'énergie accumulée par le produit au cours de la fabrication est intégralement récupérée par l'eau de process par transfert de chaleur. Il est préférable que l'eau de process atteigne une température élevée de l'ordre de 90 à 97°C en sortie d'échangeur contrairement au procédé classique où l'eau de process est produite à une température plus basse comprise entre 78 et 85°C.

Selon l'invention, le procédé comprend une étape de stripage (OP 8) du moût effectué avant l'opération de refroidissement. Le stripage permet d'éliminer certains composés volatils indésirables tels que certains aldéhydes et le dimethylsulfure (DMS) qui se forment pendant l'étape de formation.

Le stripage consiste en un écoulement gravitaire de moût dans une colonne équipée d'un dispositif d'écoulement spécifique, en vue de maximiser la surface d'évaporation, optionnellement à contre-courant de vapeur ou d'un autre gaz, en vue d'éliminer efficacement les composés volatils. En cas d'injection de vapeur à contre-courant, un taux d'injection de vapeur équivalent à un taux d'évaporation de 0,5% est préférable.

Le dispositif de stripage comprend une colonne de stripage dans laquelle de la vapeur propre est injectée et permet d'emporter les volatils. Une alternative au stripage par vapeur consiste en une étape de stripage par air chaud qui permet également d'éliminer les composés volatils de façon satisfaisante.

Lorsque le stripage (OP 8) se fait par de la vapeur propre, l'eau de process obtenue en (a) peut être chauffée dans une étape optionnelle par condensation des vapeurs d'eau produites par le stripage (OP 8). Ce chauffage complémentaire est effectué par au moins un condenseur de vapeur permettant d'accroitre la température de l'eau de process à une température comprise entre 96 et 99°C.

Lorsque le stripage (OP 8) se fait par air, l'opération ne permet pas de récupérer d'énergie.

Ce qui ne modifie en rien le bilan énergétique global du procédé. Toutefois, pour ce mode de réalisation, l'eau de process serait alors stockée à une température légèrement inférieure à 99°C de l'ordre de 90 à 95°C.

Par comparaison avec le procédé d'ébullition classique, un procédé comportant les étapes de formation et de stripage selon l'invention, permettrait ainsi de réduire la consommation de vapeur de 4% qui correspond au taux d'évaporation d'une cuve d'ébullition moderne, à un taux de 1-1.5 %, soit une économie de l'ordre 60 à 75 % sur ce poste. En outre, l'élimination des composés volatils du moût se faisant juste avant l'étape de refroidissement, il n'y plus de formation de nouveaux composés volatils. En cela ce procédé permet d'obtenir un moût d'une qualité supérieure.

Lors de l'étape (b), l'eau de process chaude produite aux étapes (a) est stockée dans une bâche tampon. S'agissant d'une eau de process, cette eau sera produite et consommée de façon continue. Le réservoir ne nécessite donc pas de stratification.

L'étape (c) optionnelle consiste en un surchauffage de l'eau chaude stockée en (b) de sa température de stockage, d'environ 99°C, à une température légèrement supérieure à la température à laquelle l'utilisateur souhaite réchauffer son moût pour l'opération dite de formation. Selon un mode de réalisation préféré, la température d'eau de process est comprise entre 103 et 105°C pour un site situé au niveau de la mer. Cette chauffe peut être réalisée avec de la vapeur ou de l'eau surchauffée.

L'étape de formation (OP 4) correspond à une étape d'ébullition classique et est réalisé pendant une durée de 60 à 90 minutes. Toutefois elle en diffère en ce qu'une quantité minimale d'énergie est utilisée pour maintenir le moût à sa température d'ébullition, c'est-à-dire a une température d'environ 100°C. Contrairement aux procédés Pfaduko, il n'est pas nécessaire de chauffer en excès le moût ni de récupérer cet excédent d'énergie sous forme d'eau chaude.

L'opération de formation (OP 4) permet la stérilisation du mout, la formation du trub et, le cas échéant, l'isomérisation du houblon. Du fait de l'absence de récupération d'énergie sous forme de vapeur à ce stade, il est préférable d'effectuer une chauffe équivalente à un taux d'évaporation d'environ 1%.

Lors de l'étape (d), l'eau chaude stockée en (b) est utilisée pour préchauffer (OP 3) le moût au cours du transfert entre le réservoir tampon et la cuve de formation. Cet échange est réalisé de façon optimale afin d'obtenir un écart de température minimal entre le moût entrant et l'eau sortant de l'échangeur. La température de l'eau est avantageusement comprise entre 78°C et 85°C en sortie d'échangeur.

Lors de l'étape (e), L'eau chaude produite en (d) est stockée dans une bâche tampon. Cette eau sera utilisée comme eau d'empatage pour produire le moût au cours des opérations de brassage (OP 1) et/ou comme eau de lavage du gâteau de filtration (OP 2). Contrairement aux procédés conventionnels, l'eau de process ne circule donc pas selon un cycle fermé de chauffage et de refroidissement.

Par ailleurs, au cours des opérations de brassage (OP 1) et de filtration (OP 2), la quantité d'eau de process incorporée au brassage est réduite par rapport aux méthodes classiques ou utilisant un Pfaduko, telle que décrite dans WO 2011/76410 étant donné que le produit ne sera pas autant concentré par évaporation au cours de la formation.

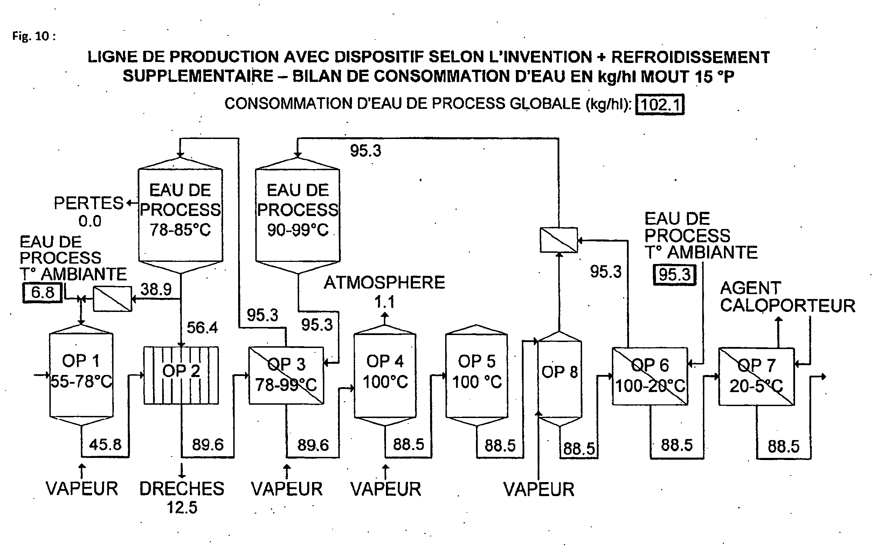

Selon un mode de réalisation préféré, tel que présenté à la Figure 10, le procédé peut être complété par un dispositif de refroidissement de l'eau de process, qui peut être par exemple une tour de refroidissement sèche, humide ou hybride, ou tout autre dispositif de refroidissement. Selon ce dispositif, une partie de l'eau de process chaude, stockée dans la bâche tampon après l'étape de préchauffage (OP 3), est refroidie jusqu'à la température d'empatage c'est-à-dire à une température de 40 à 65°C, et est utilisée soit directement, soit stockée en vue de son utilisation ultérieure pour le brassage. Il est ainsi possible d'annuler le surplus de production d'eau de process chaude, réalisant ainsi une économie d'eau globale de l'ordre de 30% en salle de brassage.

L'énergie nécessaire au préchauffage (OP 3) du moût étant apportée par l'eau de process chaude obtenue après refroidissement (OP 6) du moût, il n'est donc plus nécessaire de récupérer de l'énergie lors de l'étape d'ébullition (OP 4) selon les méthodes Pfaduko.

Le procédé selon l'invention permet ainsi de réduire la consommation en énergie nécessaire à la formation du moût et améliore le bilan global de la fabrication du moût.

Par ailleurs, le procédé selon l'invention récupère l'eau chaude uniquement à l'étape de refroidissement (OP 6) du moût et la circulation d'eau suit une boucle ouverte. Cela permet notamment d'éviter les problèmes rencontrés par l'utilisation d'un EST stratifié.

Le remplacement de l'opération d'ébullition (OP 4) du moût par une combinaison d'opérations de formation (OP 4) et de stripage (OP 8) permet à l'industrie brassicole d'obtenir un moût de qualité au moins égale à celui obtenu selon une ébullition classique (OP 4), le stripage (OP 8) permettant l'élimination des composés sulfurés dont le DMS et de certains aldéhydes, tout en réduisant de façon remarquable l'énergie totale nécessaire à la fabrication du moût.

Selon l'invention, cette optimisation en énergie comprend une étape de formation (OP 4) qui n'engendre pas de forte évaporation d'eau et une étape de stripage (OP 8) ce qui la distingue des méthodes classiques avec ou sans Pfaduko. Le procédé selon l'invention permet de réduire la consommation en eau de process et permet également de réduire de façon substantielle les pertes en eau par évaporation.

La méthode développée permet ainsi de réaliser une économie en eau et en énergie importante et permet de replacer les technologies de formation (OP 4) et de stripage (OP 8) dans une perspective nouvelle.

Selon un autre mode de réalisation, le dispositif peut avantageusement être équipé d'une installation de récupération d'énergie de type Pfaduko au niveau de la cuve de formation.

Les avantages de la méthode selon l'invention sont exposés dans les exemples suivants.

### Exemples

### Exemple 1

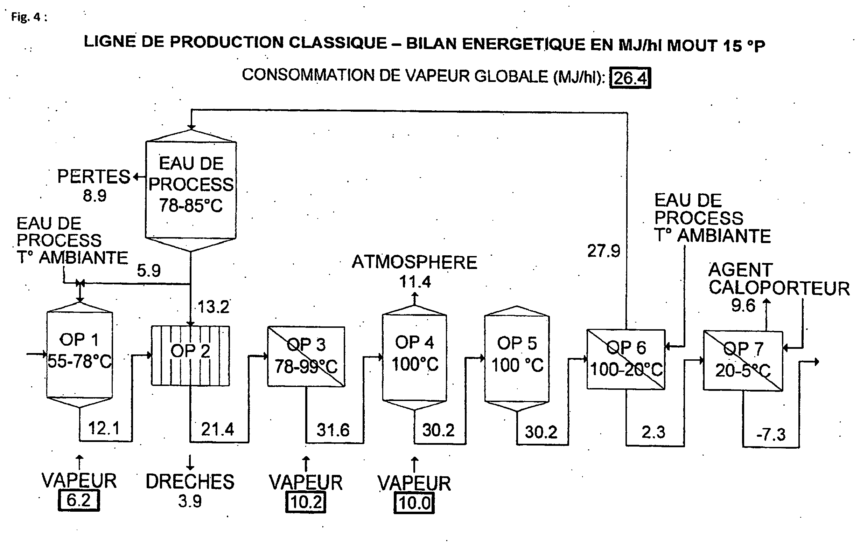

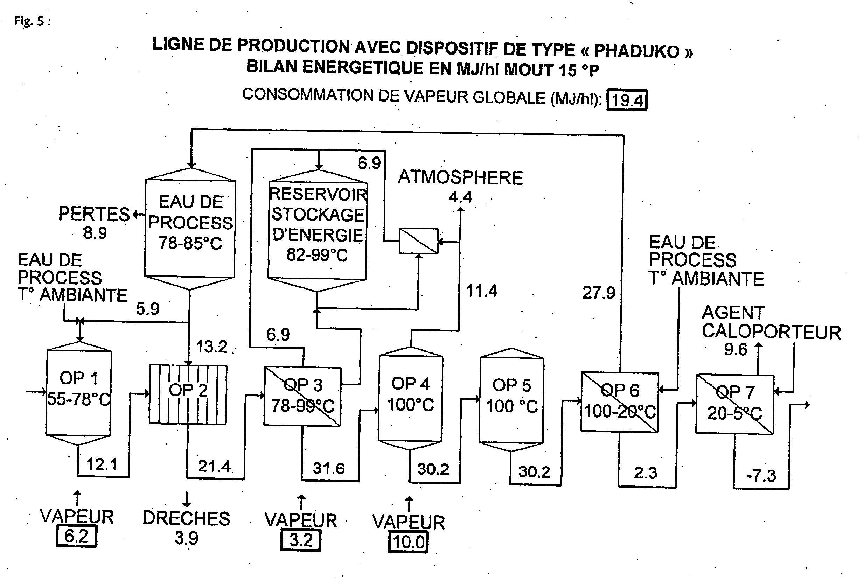

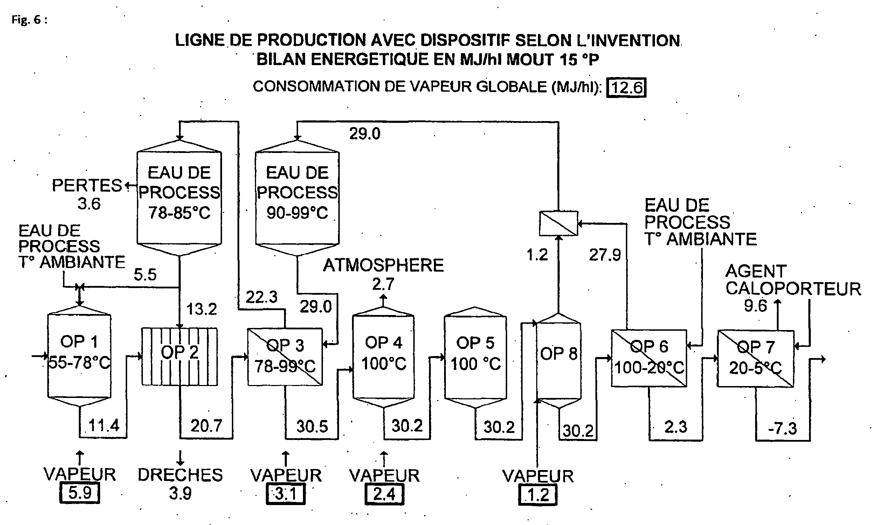

Les tableaux 1-3 ainsi que les schémas Figures 4-6 illustrent les bilans énergétiques d'une ligne de fabrication de moût selon un procédé classique, un procédé avec Pfaduko et le procédé selon l'invention. Ces différents bilans énergétiques ont été établis sur la base des hypothèses selon lesquelles la recette est une recette à 100 % de malt, que l'étape de brassage est réalisée selon une méthode d'infusion et que la température d'empatage est de 55°C. Par ailleurs il a été tenu compte d'une perte d'eau par évaporation lors de l'opération d'ébullition (OP 4) de 4% pour les méthodes classique ou avec Pfaduko. Pour la méthode selon l'invention il a été tenu compte d'une perte en eau de 1% par évaporation pendant l'opération de formation (OP 4) et de 0.5% pendant le stripage (OP 8).

Sur la base de ces conditions initiales, on constate que l'invention permet une réduction d'énergie globale de l'ordre de 50 % par rapport à un procédé classique et de 35 % par rapport à un procédé avec Pfaduko.

### Exemple 2

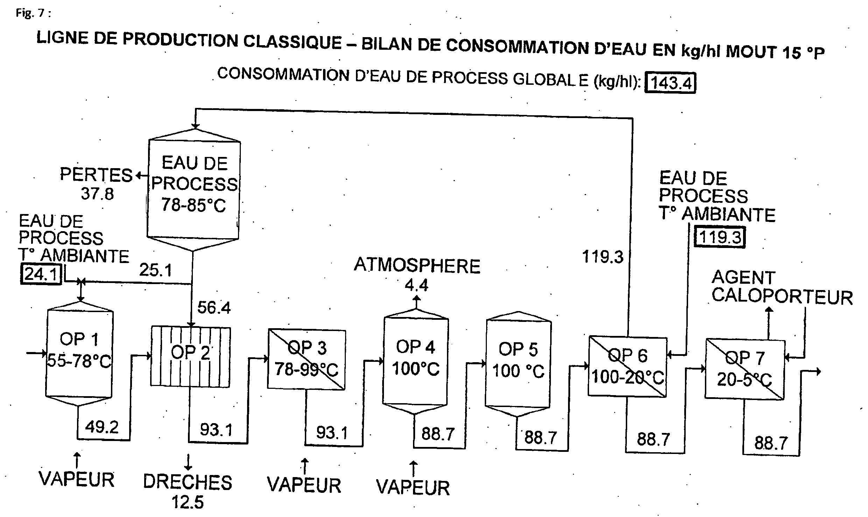

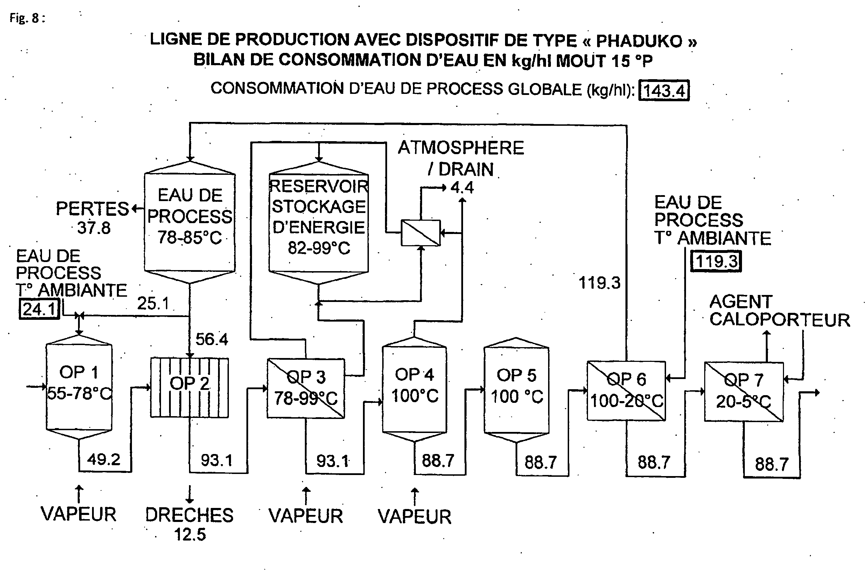

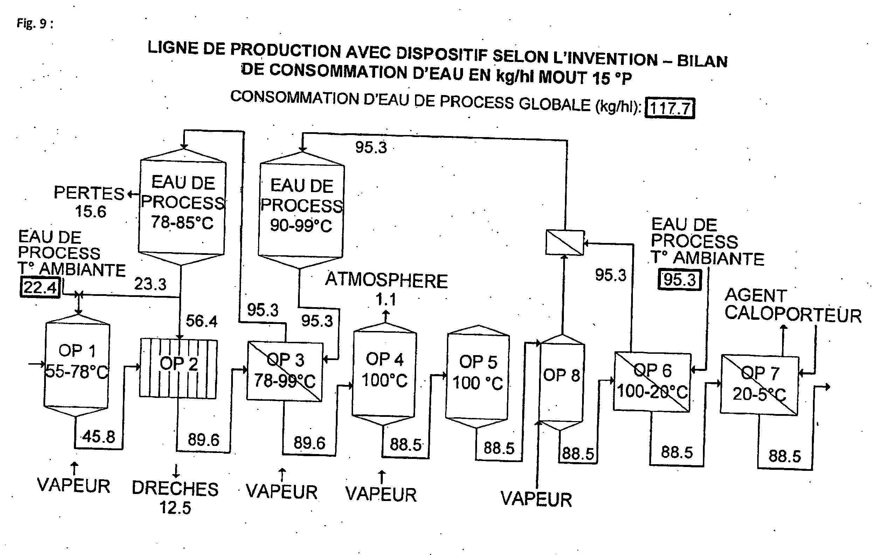

Les Figures 7 à 10 illustrent les bilans de consommation en eau des lignes de fabrication de moût selon un procédé classique (Figure 7), un procédé comprenant un Pfaduko (Figure 8) et un procédé selon l'invention (Figure 9 et 10) sur la base des hypothèses de l'exemple 1.

On constate que la quantité d'eau de process nécessaire à la fabrication de moût peut être réduite de façon importante en comparaison aux méthodes classiques ou avec Pfaduko. Ces méthodes requérant une quantité totale d'eau de process de 143.4 kg d'eau / hectolitre de moût (1.434 kg/l) selon la méthode classique ou avec Pfaduko contre 117.7 kg d'eau / hectolitre de moût (1.177 kg/l) selon l'invention. Cette quantité d'eau pouvant encore être réduite à 102.1 kg d'eau / hectolitre de moût (1.021 kg/l) si une étape de refroidissement complémentaire est mise en oeuvre avant le brassage (OP 1).

Flux énergétique par méthodes de fabrication du moût (exprimé en Megajoules / hl de moût à 15°Plato)

| **Méthode** | **Classique** | | | | **Pfaduko** | | | | **Invention** | | | |
|---|---|---|---|---|---|---|---|---|---|---|---|---|
| **Conditions** | **4% de perte par évaporation pendant l'ébullition** | | | | **4% de perte par évaporation pendant l'ébullition** | | | | **1% de perte par évaporation pendant la formation et 0.5% de perte par évaporation lors du stripage** | | | |
| Etapes\ Energie | Apport | Récupérée | Perte | Total | Apport | Récupérée | Perte | Total | Apport | Récu-pérée | Perte | Total |
| Brassage | 12.1 (5.9 + 6.2) | 0 | 0 | 12.1 | 12.1 (5.9 + 6.2) | 0 | 0 | 12.1 | 11.4 (5.5 + 5.9) | 0 | 0 | 11.4 |
| Filtration | 12.1 + 13.2 | 0 | 3.9 | 21.4 | 12.1 + 13.2 | 0 | 3.9 | 21.4 | 11.4 + 13.2 | 0 | 3.9 | 20.7 |
| Préchauffage: | 21.4 + 10.2 | 0 | 0 | 31.6 | 21.4 + 3.2 + 6.9 | 0 | 0 | 31.6 | 20.7 + 3.1 + 6.7 | 0 | 0 | 30.5 |
| Ebullition | 31.6 + 10.0 | 0 | 11.4 | 30.2 | 31.6+10.0 | **6.9** | 4.5 | 30.2 | 30.5 + 2.4 | 0 | 2.7 | 30.2 |
| Stripage | 0 | 0 | 0 | | 0 | 0 | 0 | | 1.2 | **1.2** | 0 | 30.2 |
| Refroidissement | 30.2 | **27.9** | 9.6 | -7.3 | 30.2 | **27.9** | 9.6 | -7.3 | 30.2 | **27.9** | 9.6 | -7.3 |

Récupération d'énergie par méthode de fabrication du moût: (exprimé en Megajoules / hl de moût à 15°Plato)

| Méthode | Clas siqu e | | | Pfaduko | | | Invention | | |
|---|---|---|---|---|---|---|---|---|---|
| Bilan | Tota l récu péré | Réutilisation | Perte | Total récupéré | Réutilisation | Perte | Total récupéré | Réutilisation | Perte |
| EST | 0 | 0 | 0 | 6.9 | 6.9 | 0 | 0 | 0 | 0 |
| Bâche d'eau chaude 1 | 0 | 0 | 0 | 0 | 0 | 0 | 29 | 29.0 (22.3 + 6.7) | 0 |
| Bâche d'eau chaude 2 | 27.9 | 19.1 (5.9+ 13.2) | 8.8 | 27.9 | 19.1 (5.9 + 13.2) | 8.8 | 22.3 | 18.7 (5.5 + 13.2) | 3.6 |

Bilan total en énergie thermique : (exprimé en Megajoules / hl de moût à 15°Plato)

| Méthode | Classique | Pfaduko | Invention |
|---|---|---|---|
| Bilan en énergie thermique | **26.4** | **19.4** | **12.6** |

## Revendications

1. Procédé de fabrication de moût à consommation réduite en énergie thermique et eau de process comprenant les étapes de brassage (OP 1), de filtration de la maische (OP 2), de préchauffage (OP 3), de formation (OP 4) et de stripage , de clarification (OP 5) et de refroidissement (OP 6) du moût, le procédé comprenant également les étapes suivantes :
a. après refroidissement (OP 6) du moût, par une eau de process, la température de l'eau de process en sortie d'échangeur est supérieure à 90°C,
b. l'eau de process produite à l'étape (a) est stockée,
c. l'eau de process stockée à l'étape (b) est utilisée pour le préchauffage (OP 3) du moût
d. l'eau de process produite en (c) est stockée puis utilisée comme eau d'empatage pour les opérations de brassage (OP 1) et/ou comme eau de lavage du gâteau de filtration (OP 2).

2. Procédé de fabrication de moût selon la revendication 1 **caractérisé en ce qu'**il comprend une étape de chauffage complémentaire de l'eau de process obtenue après l'étape (a).

3. Procédé de fabrication de moût selon la revendication précédente **caractérisé en ce que** le chauffage complémentaire est effectuée par échange de chaleur lors du stripage par vapeur

4. Procédé de fabrication de moût selon l'une des revendications précédentes **caractérisé en ce que** le procédé comprend une opération de surchauffage de l'eau de process stockée à l'étape (b) à une température comprise entre 103 et 105°C.

5. Procédé de fabrication de moût selon l'une des revendications précédentes **caractérisé en ce que** lors de l'étape (a), l'eau de process en sortie d'échangeur a une température comprise entre 95°C et 99°C.

6. Procédé de fabrication de moût selon l'une des revendications précédentes **caractérisé en ce qu'**a l'étape (b) l'eau de process est stockée à une température comprise entre 95 et 99°C.

7. Procédé de fabrication de moût selon l'une des revendications précédentes **caractérisé en ce que** lors de l'étape (c) la température de l'eau de process en sortie d'échangeur est comprise entre 78°C et 85°C.

8. Procédé de fabrication de moût selon l'une des revendications précédentes **caractérisé en ce que** l'eau de process stockée à l'étape (d) est utilisée comme eau d'empatage et d'eau de lavage du gâteau de filtration.

9. Procédé de fabrication de moût selon l'une des revendications précédentes **caractérisé en ce que** le procédé comprend une étape de refroidissement de l'eau de process stockée en (d) à une température comprise entre 40 et 65°C.

10. Procédé de fabrication de moût selon l'une des revendications précédentes **caractérisé en ce que** la première étape de refroidissement du moût s'effectue partiellement avant et après clarification (OP 5) du moût de 99°C à 85°C avant clarification et de 85°C à 30°C après clarification.

## Patentansprüche

1. Verfahren zur Würzeherstellung mit verringertem Verbrauch an Wärmeenergie und Prozesswasser, umfassend die Schritte des Mischens (OP 1), des Filterns der Maische (OP 2), des Vorerhitzens (OP 3), des Formierens (OP 4) und des Strippens , des Klärens (OP 5) und des Abkühlens (OP 6) der Würze, wobei das Verfahren weiter die folgenden Schritte umfasst:
a. nach Abkühlen (OP 6) der Würze durch ein Prozesswasser die Temperatur des Prozesswassers am Tauscherausgang mehr als 90°C beträgt,
b. das in Schritt (a) erzeugte Prozesswasser gelagert wird,
c. das in Schritt (b) gelagerte Prozesswasser zum Vorerhitzen (OP 3) der Würze verwendet wird,
d. das in (c) erzeugte Prozesswasser gelagert und dann als Einmaischwasser für die Mischvorgänge (OP 1) und/oder als Waschwasser des Filterkuchens (OP 2) verwendet wird.

2. Verfahren zur Würzeherstellung nach Anspruch 1, **dadurch gekennzeichnet, dass** es einen zusätzlichen Schritt des Erhitzens des nach Schritt (a) erhaltenen Prozesswassers umfasst.

3. Verfahren zur Würzeherstellung nach dem vorhergehenden Anspruch, **dadurch gekennzeichnet, dass** das zusätzliche Erhitzen mittels Wärmetausch beim Strippen mittels Dampf erfolgt.

4. Verfahren zur Würzeherstellung nach einem der vorhergehenden Ansprüche, **dadurch gekennzeichnet, dass** das Verfahren einen Überhitzungsvorgang des in Schritt (b) gelagerten Prozesswassers bei einer Temperatur, die zwischen 103 und 105°C beträgt, umfasst.

5. Verfahren zur Würzeherstellung nach einem der vorhergehenden Ansprüche, **dadurch gekennzeichnet, dass** bei Schritt (a) das Prozesswasser am Tauscherausgang eine Temperatur aufweist, die zwischen 95°C und 99°C beträgt.

6. Verfahren zur Würzeherstellung nach einem der vorhergehenden Ansprüche, **dadurch gekennzeichnet, dass** bei Schritt (b) das Prozesswasser bei einer Temperatur gelagert wird, die zwischen 95 und 99°C beträgt.

7. Verfahren zur Würzeherstellung nach einem der vorhergehenden Ansprüche, **dadurch gekennzeichnet, dass** bei Schritt (c) die Temperatur des Prozesswassers am Tauscherausgang zwischen 78°C und 85°C beträgt.

8. Verfahren zur Würzeherstellung nach einem der vorhergehenden Ansprüche, **dadurch gekennzeichnet, dass** das in Schritt (d) gelagerte Prozesswasser als Einmaischwasser und Waschwasser des Filterkuchens verwendet wird.

9. Verfahren zur Würzeherstellung nach einem der vorhergehenden Ansprüche, **dadurch gekennzeichnet, dass** das Verfahren einen Schritt des Abkühlens des in (d) gelagerten Prozesswassers auf eine Temperatur umfasst, die zwischen 40 und 65°C beträgt.

10. Verfahren zur Würzeherstellung nach einem der vorhergehenden Ansprüche, **dadurch gekennzeichnet, dass** der erste Schritt des Abkühlens der Würze zum Teil vor und nach dem Klären (OP 5) der Würze erfolgt, von 99°C auf 85°C vor dem Klären und von 85°C auf 30°C nach dem Klären.

## Claims

1. Method for manufacturing wort with reduced thermal-energy and process-water consumption, comprising steps of stirring (OP 1), filtration of the mash (OP 2), preheating (OP 3), formation (OP 4) and stripping, clarification (OP 5) and cooling (OP 6) of the wort, the method further comprising following steps:
a. after cooling (OP 6) of the wort, with process water, the temperature of the process water emerging from the heat exchanger is above 90°C,
b. the process water produced at step (a) is stored,
c. the process water stored at step (b) is used for preheating (OP 3) the wort,
d. the process water produced at (c) is stored and then used as mashing water for the stirring operations (OP 1) and/or as water for washing the filtration cake (OP 2).

2. Wort manufacturing method according to claim 1, **characterised in that** it comprises a step of supplementary heating of the process water obtained after step (a).

3. Wort manufacturing method according to the preceding claim, **characterised in that** the supplementary heating is carried out by heat exchange during steam stripping .

4. Wort manufacturing method according to one of the preceding claims, **characterised in that** the method comprises an operation of superheating the process water stored at step (b) to a temperature of between 103°C and 105°C.

5. Wort manufacturing method according to one of the preceding claims, **characterised in that**, during step (a), the process water emerging from the heat exchanger has a temperature of between 95°C and 99°C.

6. Wort manufacturing method according to one of the preceding claims, **characterised in that**, at step (b), the process water is stored at a temperature of between 95°C and 99°C.

7. Wort manufacturing method according to one of the preceding claims, **characterised in that**, during step (c), the temperature of the process water emerging from the heat exchanger is between 78°C and 85°C.

8. Wort manufacturing method according to one of the preceding claims, **characterised in that** the process water stored at step (d) is used as mashing water and water for washing the filtration cake.

9. Wort manufacturing method according to one of the preceding claims, **characterised in that** the method comprises a step of cooling the process water stored at (d) to a temperature of between 40°C and 65°C.

10. Wort manufacturing method according to one of the preceding claims, **characterised in that** the first step of cooling the wort takes place partially before and after clarification (OP 5) of the wort from 99°C to 85°C before clarification and from 85°C and 30°C after clarification.
